# EUROPÄISCHE PATENTSCHRIFT

(11) **EP 2 990 733 B1**
(45) Veröffentlichungstag und Bekanntmachung des Hinweises auf die Patenterteilung: **18.07.2018**
(21) Anmeldenummer: 15180468.9
(22) Anmeldetag: 11.08.2015
(51) Int. Cl.: F24C 15/32, H05B 6/64

(54) **Gargerät**
Cooking device
Appareil de cuisson

(30) Priorität: 28.08.2014 DE 102014112352
(43) Veröffentlichungstag der Anmeldung: 02.03.2016
(73) Patentinhaber: Miele & Cie. KG, 33332 Gütersloh (DE)
(72) Erfinder: Höhn, Rüdiger, 33120 Hiddenhausen (DE); Schnee, Alexander, 32257 Bünde (DE); Schulze, Christian, 32130 Enger (DE); Kaudewitz, Carolin, 33378 Rheda-Wiedenbrück (DE)

(56) Entgegenhaltungen:
- EP-A1- 1 610 063
- EP-A2- 1 862 099
- WO-A1-2013/003891
- DE-A1-102010 002 853
- DE-A1-102011 088 454
- DE-A1-102011 088 482
- JP-A- 2005 155 998
- JP-A- 2008 025 895
- US-A1- 2006 249 136

## Beschreibung

Die vorliegende Erfindung betrifft ein Gargerät mit wenigstens einer Gehäuseeinrichtung, wenigstens einem Garraum und wenigstens einer Dampferzeugereinrichtung. Dabei ist die Dampferzeugereinrichtung dazu geeignet und ausgebildet ist, den Garraum mit Dampf zu versorgen. Weiterhin ist der Dampferzeugereinrichtung wenigstens eine entnehmbare Behältereinrichtung zugeordnet, welche wenigstens einen Behälterabschnitt und wenigstens einen Halteabschnitt umfasst.

Gargeräte mit einem Dampferzeuger, insbesondere Dampfgarer, bieten einem Benutzer die Möglichkeit, Gargut besonders schonend mittels Dampf zuzubereiten. Um Dampf in dem Garraum zur Verfügung zu stellen, sind mehrere Methoden zur Dampferzeugung bekannt geworden.

Bei der internen Dampferzeugung wird Wasser in den Garraum eingeleitet und auf einer Verdampfungsfläche, meist auf dem Garraumboden, erhitzt und verdampft. Externe Dampferzeuger hingegen produzieren außerhalb des Garraumes Dampf und leiten kein Wasser, sondern nur Dampf in den Garraum ein.

Bei beiden Arten der Dampferzeugung muss dem Dampferzeuger bzw. der jeweiligen Vedampfungsfläche je nach Bedarf Wasser zugeführt werden. Dazu eignet sich unter anderem ein Festwasseranschluss an dem Gargerät, der den Dampferzeuger jederzeit bedarfsmäßig mit Wasser versorgen kann. Ein Festwasseranschluss ist jedoch nicht immer realisierbar und zudem nicht immer gewünscht.

Es sind weiterhin Gargeräte bekannt geworden, die einen entnehmbaren Wassertank für den Dampferzeuger umfassen. In einem solchen Wassertank kann Wasser zur Dampferzeugung bevorratet werden. Dabei sollte ein solcher Wassertank idealer Weise soviel Wasser aufnehmen können, dass wenigstens ein vollständiger Garvorgang mit der gespeicherten Wassermenge durchgeführt werden kann. Ansonsten müsste der Benutzer während des Garvorgangs Wasser nachfüllen, was den Bedienkomfort und im schlimmsten Fall sogar die Effizienz und/oder das Garergebnis negativ beeinflussen kann.

Nachteilig bei ausreichend großen Wassertanks ist jedoch, dass diese konstruktiv nur sehr schwierig an dem Gargerät vorgesehen werden können, sodass vorgegebene Außenmaße des Gargerätes und/oder des Garraumes wenn nur schwierig eingehalten werden können.

Die Dokumente DE 20 2010 002 853 A1, JP 2005155998 A, US 2006/0249136 A1, DE 10 2011 088 482 A1 und DE 10 2011 088 454 A1 offenbaren Dampfgeräte mit jeweils einer Behältereinrichtung zur Aufnahme von Wasser.

Das Dokument WO 2013/003891 A1 offenbart ein Verfahren zur Messung eines Flüssigkeit-Füllstands. Zudem offenbart dieses Dokument eine Entnahmeeinrichtung, die wenigstens eine schwenkbare Rohreinrichtung umfasst, welche beim Einschieben wenigstens abschnittsweise in einen Behälterabschnitt eintaucht.

Das Dokument EP 1 862 099 A2 offenbart ein Dampfgerät mit einer Heizvorrichtung, welche in eine Wasserschublade abgesenkt werden kann. Es ist daher die Aufgabe der vorliegenden Erfindung, ein Gargerät mit einer Dampferzeugereinrichtung und einer der Dampferzeugereinrichtung zugeordneten entnehmbaren Behältereinrichtung zur Verfügung zu stellen, wobei die Behältereinrichtung platzsparend an dem Gargerät vorgesehen werden kann und zudem ein ausreichendes Aufnahmevolumen zur Verfügung stellt.

Diese Aufgabe wird gelöst durch ein Gargerät mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Gargerät umfasst wenigstens eine Gehäuseeinrichtung, wenigstens einen Garraum und wenigstens eine Dampferzeugereinrichtung. Die Dampferzeugereinrichtung umfasst wenigstens eine entnehmbare Behältereinrichtung und ist dazu geeignet und ausgebildet, den Garraum mit Dampf zu versorgen, wobei die Behältereinrichtung wenigstens einen Behälterabschnitt und wenigstens einen Halteabschnitt umfasst. Dabei weisen der Behälterabschnitt und der Halteabschnitt zusammen eine Längsausdehnung auf. Die Behältereinrichtung umfasst eine Abdeckeinrichtung, welche als Deckel ausgebildet ist, und weist wenigstens eine Öffnung auf. Erfindungsgemäß beträgt die Längsausdehnung ein Vielfaches der Breite des Behälterabschnitts. Zudem weist wenigstens der Behälterabschnitt eine Höhe auf, die ein Vielfaches der Breite des Behälterabschnitts beträgt. Der Behälterabschnitt stellt ein Aufnahmevolumen für zu verdampfendes Wasser zur Verfügung, das mindestens 1 Liter beträgt. Die Behältereinrichtung ist in eine entsprechende Aufnahmeeinrichtung neben dem Garraum einschiebbar und die Dampferzeugereinrichtung umfasst wenigstens eine Entnahmeeinrichtung, die wenigstens eine schwenkbare Rohreinrichtung umfasst, welche beim Einschieben der Behältereinrichtung in die Aufnahmeeinrichtung wenigstens abschnittsweise in den Behälterabschnitt eintaucht. Die Rohreinrichtung ist als ein Saugrohr ausgeführt, welches bei der Entnahme von Wasser aus der Behältereinrichtung in diesen eingetaucht ist. Zudem ist die Öffnung in der Abdeckeinrichtung insbesondere länglich ausgebildet und durch einen Schlitz zur Verfügung gestellt, wobei durch die Öffnung die Rohreinrichtung in den Behälterabschnitt einschwenkbar ausgeführt ist. Der Behälterabschnitt ist erfindungsgemäß insbesondere wenigstens abschnittsweise nach oben offen ausgestaltet, sodass der Behälterabschnitt mit Wasser befüllt werden kann und sodass geeignete Mittel in den Behälter eingeführt werden können, um das Wasser aus dem Behälterabschnitt zu entnehmen und der Dampferzeugereinrichtung zuzuführen. In anderen zweckmäßigen Weiterbildungen kann der Behälterabschnitt aber auch nach oben im Wesentlichen geschlossen ausgebildet sein. Dann kann vorzugsweise unten an dem Behälterabschnitt eine Art Ventil zur Entnahme von Wasser vorgesehen sein.

Der Halteabschnitt umfasst erfindungsgemäß insbesondere einen Griff und dient dazu, die Behältereinrichtung zu ergreifen. So kann die Behältereinrichtung aus dem Gargerät entnommen und mit Wasser befüllt werden.

Der Behälterabschnitt und der Halteabschnitt sind vorzugsweise im Wesentlichen gleich hoch und gleich breit ausgebildet.

Unter einem Vielfachen ist insbesondere erfindungsgemäß zu verstehen, dass die entsprechende Ausdehnung mindestens dreimal so groß wie die in Relation gesetzte Ausdehnung ist. Das erfindungsgemäße Gargerät bietet viele Vorteile. Ein erheblicher Vorteil ist, dass ein Gargerät mit einer Dampferzeugereinrichtung zur Verfügung gestellt wird, die eine Behältereinrichtung aufweist, die eine besonders schmale Abmessung aufweist und trotzdem ein ausreichendes Wasservolumen zur Verfügung stellt.

Dies wird dadurch erreicht, dass die Ausmaße der Behältereinrichtung derart vorgesehen sind, dass diese eine relativ große Längsausdehnung und Höhe aufweist, dabei aber relativ schmal ausgestaltet ist. So wird es beispielsweise möglich, dass der durch die Behältereinrichtung zur Verfügung gestellte Wassertank für die Dampferzeugereinrichtung seitlich neben dem Garraum vorgesehen werden kann, ohne die äußeren Ausmaße des Gargerätes überhaupt oder wesentlich zu verändern und ohne das Platzangebot im Garraum wesentlich zu verkleinern.

Zudem kann unter anderem auch die Behältereinrichtung ohne eine zusätzliche Abdeckeinrichtung vorgesehen werden, da die Behältereinrichtung bei geschlossener Garraumtür von dieser optisch ansprechend verdeckt wird.

Bevorzugt ist die Längsausdehnung des Behälterabschnitts und des Halteabschnitts und/oder die Höhe des Behälterabschnitts mindestens viermal so groß wie die Breite des Behälterabschnitts. Dabei ist insbesondere bevorzugt, dass die entsprechenden Ausdehnungen mindestens fünfmal so groß wie die Breite des Behälterabschnitts sind. Je größer das Verhältnis zwischen Längsausdehnung und Höhe zur Breite der Behältereinrichtung ausgelegt ist, umso schmaler kann die Behältereinrichtung vorgesehen werden, ohne ein vorbestimmtes Aufnahmevolumen für zu verdampfendes Wasser zu unterschreiten.

Besonders bevorzugt ist die Längsausdehnung des Behälterabschnitts und des Halteabschnitts zusammen größer als die Höhe des Behälterabschnitts. Dadurch wird erreicht, dass die Behältereinrichtung insgesamt länger bzw. tiefer als hoch ausgestaltet ist. Dadurch kann je nach Ausführungsbeispiel die nicht unerhebliche Tiefe des Gargerätes ausgenutzt werden, um ein ausreichendes Aufnahmevolumen für zu verdampfendes Wasser in dem Behälterabschnitt der Behältereinrichtung zur Verfügung zu stellen.

In besonders vorteilhaften Weiterbildungen beträgt das Aufnahmevolumen mindestens 1,3 Liter. Besonders bevorzugt ist dabei, dass das Aufnahmevolumen wenigstens 1,5 Liter beträgt. Insbesondere bei einer Ausgestaltung mit einem Aufnahmevolumen von 1,5 Litern kann in der Regel gewährleistet werden, dass ein vollständiger Garvorgang mit Dampf vorgenommen werden kann, ohne dass zwischenzeitlich Wasser nachgefüllt werden muss. Dies würde den Komfort für einen Benutzer mindern und zudem das Garergebnis unter Umständen negativ beeinflussen und die Effizienz des Gargerätes verringern. Allgemein ist bevorzugt, dass die Größe des Aufnahmevolumens derart an die Größe des Garraumes angepasst ist, dass ein ausreichender Wasservorrat für einen vollständigen Garvorgang bereitgestellt wird.

Vorzugsweise liegt die Breite des Behälterabschnitts zwischen 3 cm und 5 cm. Dabei entspricht die Breite des Halteabschnitts bevorzugt wenigstens ungefähr der Breite des Behälterabschnitts.

Bevorzugt liegt die Höhe des Behälterabschnitts zwischen 15 cm und 25 cm und/oder die Längserstreckung des Behälterabschnitts liegt zwischen 20 cm und 30 cm und/oder die Längserstreckung des Behälterabschnitts und des Halteabschnitts liegt zusammen zwischen 25 und 35 cm. Solche Ausgestaltungen haben sich als zweckmäßig erwiesen, um einen vorteilhaft gestalteten Aufnahmebehälter zur Verfügung zu stellen.

Besonders bevorzugt ist im Behälterabschnitt wenigstens die Abdeckeinrichtung zugeordnet. Diese Abdeckeinrichtung ist als Deckel ausgebildet, der vorzugsweise abnehmbar ausgestaltet ist. Erfindungsgemäß weist die Abdeckeinrichtung wenigstens eine Öffnung auf. Dabei ist insbesondere eine Öffnung zum Befüllen des Behälterabschnitts mit Wasser vorgesehen. Zudem kann in eine solche Öffnung in vorteilhaften Ausgestaltungen eine Einrichtung zur Entnahme von Wasser eingeführt werden, über welche Wasser der Dampferzeugereinrichtung zum Verdampfen zugeführt wird. Besonders bevorzugt weist die Öffnung eine längliche Form aus und ist insbesondere als Schlitz ausgebildet.

In zweckmäßigen Ausgestaltungen ist der Abdeckeinrichtung wenigstens eine Schutzeinrichtung zugeordnet. Eine solche Schutzeinrichtung ist bevorzugt als sogenannter Schwappschutz ausgebildet, wobei die Schutzeinrichtung verhindert, dass Wasser beim Transportieren der Behältereinrichtung nicht aus der Öffnung der Abdeckeinrichtung austreten kann. Die Schutzeinrichtung ist dabei insbesondere als Art Kragen ausgebildet, der sich wenigstens abschnittsweise nach unten in dem Behälterabschnitt erstreckt. Die Schutzeinrichtung ist bevorzugt an dem oberen Rand des Behälterabschnitts oder besonders bevorzugt auch an der Abdeckeinrichtung vorgesehen sein. Dann ist die Schutzeinrichtung insbesondere der Öffnung der Abdeckeinrichtung zugeordnet. Dabei ist die Schutzeinrichtung vorzugsweise derart ausgebildet, dass ein einfaches Befüllen des Behälterabschnitts mit Wasser möglich ist. Die Schutzeinrichtung verhindert jedoch, dass Wasser beim Transport der Behältereinrichtung von einer Wasserquelle zum Gargerät nach dem Befüllen der Behältereinrichtung nicht aus diesem überschwappen kann. Besonders bevorzugt umgreift die Abdeckeinrichtung wenigstens zwei Wandungen wenigstens des Behälterabschnitts. Dadurch wird erreicht, dass die Abdeckeinrichtung bzw. der Deckel die Behältereinrichtung stabilisiert. Durch das Umgreifen der beiden Wandungen kann die Abdeckeinrichtung die beiden Wandungen in einer bestimmten Position zueinander fixieren. So können die Wandungen des Behälterabschnitts beispielsweise in einer geringen Stärke vorgesehen werden, ohne dass sich der Behälterabschnitt beim Befüllen mit Wasser verformt oder auseinanderbricht.

In zweckmäßigen Ausgestaltungen umfasst der Halteabschnitt wenigstens eine Bedienmarkierung. Eine solche Markierung ist insbesondere dann vorteilhaft, wenn ein Mechanismus zum Entnehmen der Behältereinrichtung an dem Gargerät vorgesehen ist. Die Bedienmarkierung zeigt dann dem Benutzer einen optimalen Kraftpunkt zum Auslösen des Mechanismus an. Erfindungsgemäß ist die Behältereinrichtung in eine entsprechende Aufnahmeeinrichtung neben dem Garraum einschiebbar. Eine solche Aufnahmeeinrichtung ist insbesondere ein an die Behältereinrichtung angepasstes Einschubfach, in welches die Behältereinrichtung einfach eingeschoben werden kann. Dabei ist diese entsprechende Aufnahmeeinrichtung insbesondere im Wesentlichen passgenau auf die Behältereinrichtung abgestimmt. Dadurch, dass die Behältereinrichtung besonders schmal dafür aber hoch und lang ausgebildet ist, wird es möglich, dass ein ausreichendes Aufnahmevolumen neben dem Garraum angeordnet werden kann.

Besonders bevorzugt schließt die Behältereinrichtung im installierten Zustand im Wesentlichen bündig mit wenigstens einer Frontfläche der Gehäuseeinrichtung ab. Dabei schließt die Behältereinrichtung insbesondere im Wesentlichen flächenbündig mit der Frontfläche ab. Unter dem installierten Zustand ist hier der Betriebszustand gemeint, in welchem die Behältereinrichtung in das Gargerät vollständig eingeschoben ist und in welchem ein Saugrohr zur Entnahme von Wasser aus dem Behälter in diesen eingetaucht ist. Durch die flächenbündige Aufnahme der Behältereinrichtung in der Aufnahmeeinrichtung wird ein Benutzer davon abgehalten, zwischen Behältereinrichtung und Aufnahmeeinrichtung zu greifen und die Behältereinrichtung einfach herauszuziehen.

Es ist weiterhin bevorzugt, dass der Aufnahmeeinrichtung wenigstens einen push-to-open-Mechanismus zu geordnet ist. Dieser push-to-open-Mechanismus ermöglicht es, dass die Behältereinrichtung gegen eine Federkraft einer Federeinrichtung im Wesentlichen vollständig in das Gargerät eingeschoben wird. Im eingeschobenen Zustand der Behältereinrichtung wird die Federeinrichtung des push-to-open-Mechanismus dann in der vorgespannten Position fixiert. Zum Entnehmen der Behältereinrichtung wird der Behälter dann erneut ein Stück in das Gargerät eingeschoben, wodurch der push-to-open-Mechanismus ausgelöst wird und die gespeicherte Federkraft freigegeben wird. Dadurch wird die Behältereinrichtung wenigstens ein Stück aus dem Gargerät herausgeschoben, wodurch ein Benutzer es einfach ergreifen kann. Dabei kann der push-to-open-Mechanismus sowohl der Aufnahmeeinrichtung, also dem Gargerät, oder aber auch der Behältereinrichtung zugeordnet sein. Erfindungsgemäß umfasst die Dampferzeugereinrichtung wenigstens eine Entnahmeeinrichtung, die wenigstens eine schwenkbare Rohreinrichtung umfasst. Diese Rohreinrichtung taucht beim Einschieben der Behältereinrichtung in die Aufnahmeeinrichtung wenigstens abschnittsweise in den Behälterabschnitt ein. Dabei taucht die Rohreinrichtung bevorzugt bei Einschieben der Behältereinrichtung automatisch ein und wird beim Entnehmen der Behältereinrichtung aus dem Gargerät auch automatisch wieder aus der Behältereinrichtung ausgeschwenkt. Dazu kann die Rohreinrichtung eine Federeinrichtung umfassen, welche die Rohreinrichtung automatisch eine bestimmte Position bewegt. Die Rohreinrichtung ist vorzugsweise oberhalb der Behältereinrichtung vorgesehen und befindet sich vor dem Einschieben der Behältereinrichtung bevorzugt in einer in etwa horizontalen Position. Beim Einschieben der Behältereinrichtung verlagert sich die Rohreinrichtung automatisch in eine ungefähr vertikale Position, um Wasser aus dem Behälterabschnitt zu entnehmen.

In zweckmäßigen Weiterbildungen ist dem Garraum wenigstens eine Mikrowelleneinrichtung zugeordnet, welche wenigstens einen Hochfrequenzerzeuger umfasst, der dazu geeignet und ausgebildet ist, Hochfrequenzstrahlung an wenigstens einer Eintrittsstelle in den Garraum einzuleiten. Durch eine solche Ausgestaltung kann ein Kombigargerät zur Verfügung gestellt werden, mit welchem Speisen im Garraum sowohl im Dampfbetrieb als auch im Mikrowellenbetrieb oder in einem Kombinationsbetrieb gegart werden können.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargerätes in einer Frontansicht;
- Figur 2: das Gargerät gemäß Figur 1 ohne Garraumtür;
- Figur 3: eine rein schematische Darstellung einer Behältereinrichtung in einer perspektivischen Ansicht;
- Fig. 4: eine rein schematische Schnittansicht durch eine Behältereinrichtung;
- Fig. 5: eine rein schematische Darstellung einer Behältereinrichtung in einer Seitenansicht;
- Fig. 6: eine rein schematische Darstellung einer Behältereinrichtung in einer Draufsicht;
- Fig.7: eine reich schematische Darstellung einer Behältereinrichtung von der Seite in der nicht näher dargestellten Aufnahmeeinrichtung eines erfindungsgemäßen Gargerätes vor der Entnahme der Behältereinrichtung; und
- Fig. 8: die Ansicht gemäß Figur 7 in der Betriebsstellung der Behältereinrichtung.

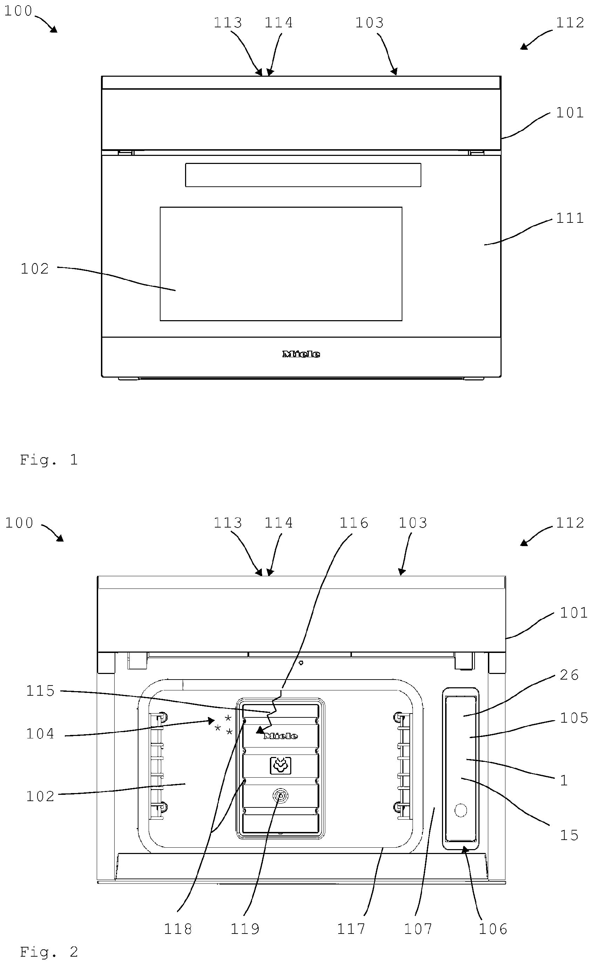

In Figur 1 ist ein erfindungsgemäßes Gargerät 100 rein schematisch in einer Frontalansicht dargestellt. Dabei umfass das Gargerät 100 eine Gehäuseeinrichtung 101, in der ein Garraum 102 ausgebildet ist. Der Garraum 102 ist dabei in Figur 1 von einer Garraumtür 111 verschlossen. Das Gargerät 100 umfasst weiterhin eine Dampferzeugereinrichtung 103, welche dazu geeignet und ausgebildet ist, den Garraum 102 mit Dampf 104 zu versorgen.

Das gezeigte Gargerät 100 ist hier als Kombigargerät 112 ausgebildet, wobei dem Garraum 102 neben der Dampferzeugereinrichtung 103 zusätzlich eine Mikrowelleneinrichtung 113 zugeordnet ist, die einen Hochfrequenzerzeuger 114 umfasst. Dabei ist der Hochfrequenzerzeuger 114 dazu geeignet und ausgebildet, Hochfrequenzstrahlung 115 an wenigstens einer Eintrittsstelle 116 in den Garraum 102 einzuleiten.

In Figur 2 ist das Gargerät 100 gemäß Figur 1 dargestellt, wobei in dieser Ansicht die Garraumtür 111 nicht dargestellt ist. Dabei blickt man durch die Beschickungsöffnung 117 in den Garraum 102. In dem Garraum 102 sind verschiedene Dampfeinlässe 118 vorgesehen, über welche der Dampf 104 in den Garraum 102 geleitet werden kann. Zudem umfasst der Garraum 102 einen Dampfauslass 119, über welchen überschüssiger Dampf 104 aus dem Garraum 102 abgeführt werden kann.

Erfindungsgemäß umfasst die Dampferzeugereinrichtung 103 des Gargerätes 100 eine Wasservorrateinrichtung 105, welche in dem hier gezeigten Ausführungsbeispiel als Behältereinrichtung 1 ausgestaltet ist. Die Behältereinrichtung 1 ist dabei in einer entsprechend ausgestalteten Aufnahmeeinrichtung 106 in der Gehäuseeinrichtung 101 des Gargerätes 100 neben dem Garraum 102 vorgesehen. Dabei ist die Aufnahmeeinrichtung 106 derart ausgestaltet und an die Behältereinrichtung 1 angepasst, dass die Behältereinrichtung 1 im Wesentlichen vollständig in der Aufnahmeeinrichtung 106 aufgenommen werden kann.

So bildet die Front 26 der Behältereinrichtung 1 zusammen mit der Frontfläche 107 der Gehäuseeinrichtung 101 eine im Wesentlichen bündige Fläche. Dabei sind die Behältereinrichtung 1 und die Frontfläche 107 im Wesentlichen flächenbündig vorgesehen. So wird insbesondere verhindert, dass ein Benutzer versucht, bei einer eingeschobenen Behältereinrichtung 1 zwischen Griff 25 und Aufnahmeeinrichtung 106 zu gelangen und diese herauszuziehen. Die Entnahme der Behältereinrichtung 1 soll nämlich über einen später näher beschriebenen push-to-open-Mechanismus erfolgen.

Die Anordnung der Behältereinrichtung 1 neben dem Garraum 102 ist durch die spezielle Ausgestaltung der Behältereinrichtung 1 möglich. Dabei kann die Behältereinrichtung 1 durch die spezielle Dimensionierung der Behältereinrichtung 1 neben dem Garraum 102 aufgenommen werden, ohne die Größe des Garraumes einschränken bzw. wesentlich einschränken zu müssen oder aber die Außendimensionen des Gargerätes zu vergrößern bzw. wesentlich zu vergrößern. Die spezielle Dimensionierung und Ausgestaltung der Behältereinrichtung 1 ist in den nachfolgenden Figuren näher erläutert.

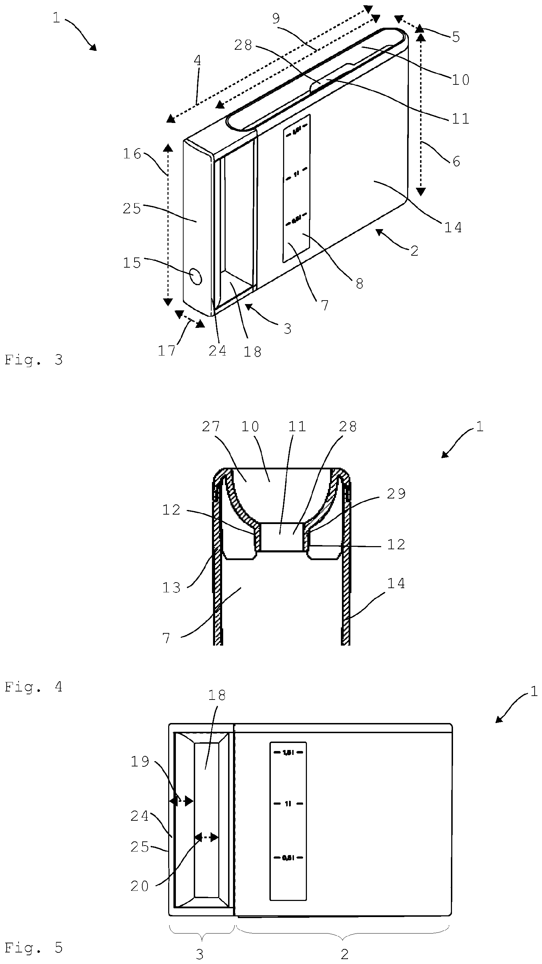

In Figur 3 ist die Behältereinrichtung 1 in einer rein schematischen perspektivischen Ansicht dargestellt. Dabei umfasst die Behältereinrichtung 1 einen Behälterabschnitt 2 und einen Halteabschnitt 3. Der Behälterabschnitt 2 stellt ein Aufnahmevolumen 7 für Wasser 8 zur Verfügung. Der Halteabschnitt 3 umfasst einen Griff 25, welcher es einem Benutzer ermöglicht, die Behältereinrichtung 1 trotz der speziellen Ausmaße sicher und komfortabel zu halten.

Der Behälterabschnitt 2 und der Halteabschnitt 3 weisen zusammen eine Längsausdehnung 4 auf, die ein Vielfaches der Breite 5 des Behälterabschnitts 2 ausmacht. Zudem ist die Höhe 6 des Behälterabschnitts 2 um ein Vielfaches größer, als die Breite 5 des Behälterabschnitts 2. Dabei entspricht die Höhe 6 des Behälterabschnitts 2 der Höhe 16 des Halteabschnitts 3.

Die Behältereinrichtung 1 bzw. der Behälterabschnitt 2 ist derart dimensioniert und ausgestaltet, dass der Behälterabschnitt 2 ein Aufnahmevolumen 7 für zu verdampfendes Wasser 8 zur Verfügung stellt, das mindestens 1 Liter beträgt. Dabei ist in dem hier gezeigten Ausführungsbeispiel das Aufnahmevolumen 7 für Wasser 8 derart groß gewählt, dass 1,5 Liter aufgenommen werden können.

Das Aufnahmevolumen 7 ist dabei an die Größe des Garraumes 102 angepasst und derart gewählt, dass mit einer Füllung der Behältereinrichtung 1 ein vollständiger Garvorgang im Dampfbetrieb vorgenommen werden kann. So muss ein Benutzer während eines Garvorgangs nicht die Garraumtür 111 öffnen, um Wasser 8 in die Behältereinrichtung 1 nachzufüllen. Dies würde den Bedienkomfort des Gargerätes 100 einschränken und zudem die Effektivität des Gargerätes 100 beeinträchtigen, da durch das Öffnen der Garraumtür 111 ein nicht unwesentlicher Anteil an Dampf 104 aus dem Garraum entweichen würde.

Allgemein kann durch die Behältereinrichtung 1 erreicht werden, dass ein ausreichendes Aufnahmevolumen 7 für zu verdampfendes Wasser 8 zur Verfügung gestellt wird, wobei die Behältereinrichtung möglichst schmal vorgesehen ist. So kann sie platzsparend neben dem Garraum 102 angeordnet werden. Dabei beträgt die Breite 5 des Behälterabschnitts 2 vorzugsweise zwischen 3 cm und 5 cm. In dem hier gezeigten Ausführungsbeispiel beträgt die Breite 5 gut 4 cm.

Um die Behältereinrichtung 1 gut ergreifen zu können, ist zwischen dem Halteabschnitt 3 und dem Behälterabschnitt 2 ein Eingriff 18 vorgesehen, durch welchen ein Benutzer seine Hand hindurch stecken kann. Dadurch wird es möglich, dass ein Benutzer den Griff 25 des Halteabschnitts 3 sicher umfassen kann. So kann der Benutzer trotz der speziellen Dimensionierung der Behältereinrichtung 1 die Behältereinrichtung 1 sicher und dennoch komfortabel aus dem Gargerät 100 entnehmen und z. B. zu einem Waschbecken transportieren.

Die hier gezeigte Ausführungsform der Behältereinrichtung 1 weist eine Längsausdehnung 4 von Behälterabschnitt 2 und Halteabschnitt 3 von 31,1 cm auf. Dabei entfallen davon auf die Längserstreckung 9 des Behälterabschnitts 25,6 cm. Die Behältereinrichtung 1 weist zudem eine Höhe von 21,2 cm auf. Die Breite 5 des Behälterschnitts 2 entspricht der Breite 17 des Halteabschnitts 3, wobei eine Breite von 4,4 cm gewählt ist. In anderen Ausgestaltungen können zweckmäßig auch andere Ausmaße vorgesehen sein, wie sie unter anderem in den Ansprüchen definiert sind.

Bevorzugt ist jedoch allgemein, dass die Behältereinrichtung 1 um ein Vielfaches höher und um ein Vielfaches tiefer ausgebildet ist, als die Behältereinrichtung 1 breit ausgestaltet ist. Unter einem Vielfachen ist dabei insbesondere zu verstehen, dass die Behältereinrichtung 1 mindestens dreimal, viermal, fünfmal oder noch höher und/oder tiefer als breit ausgebildet ist.

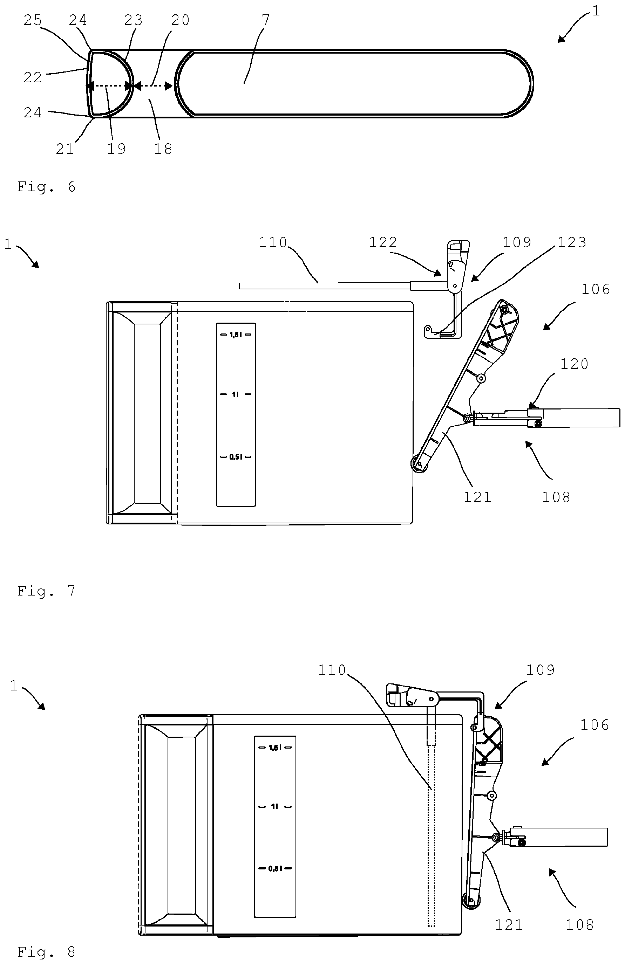

An dem Halteabschnitt 2 bzw. an der Front 26 des Halteabschnitts 3 ist eine Markierung 15 vorgesehen, welche einem Benutzer einen geeigneten Kraftpunkt zum Entnehmen der Behältereinrichtung 1 anzeigt. Wie in den Figuren 7 und 8 noch erläutert wird, wird ein Benutzer bei der Entnahme der Behältereinrichtung 1 aus der Aufnahmeeinrichtung 106 durch einen push-to-open-Mechanismus 108 unterstützt.

Die Behältereinrichtung 1 umfasst zudem in dem hier gezeigten Ausführungsbeispiel eine Abdeckeinrichtung 10. Diese Abdeckeinrichtung 10 ist als Deckel 27 ausgebildet, der in dieser Ausführung wenigstens eine Öffnung 11 aufweist.

Eine rein schematische Schnittansicht durch eine Behältereinrichtung 1 ist in Figur 4 näher darstellstellt. Hier ist zu erkennen, dass die Abdeckeinrichtung 10 derart ausgebildet, dass sie auf den Behälterabschnitt 2 aufgesetzt werden kann. Dabei umgreift die Abdeckeinrichtung 10 wenigstens abschnittsweise die beiden Wandungen 13 und 14 der Behältereinrichtung 1. Dadurch wird eine zusätzliche Stabilisierung des Behälterabschnitts 2 ermöglicht, da die Abdeckeinrichtung 10 die beiden Wandungen 13 und 14 in einer bestimmten Position zueinander fixiert. So wird es insbesondere auch möglich, dass die Wandstärken der Wandungen 13, 14 sehr gering ausgeführt werden können, ohne dass es zu einer Instabilität der Behältereinrichtung 1 kommt.

Die Öffnung 11 in der Abdeckung 10 dient insbesondere zum Befüllen des Behälterabschnitts 2 mit Wasser 8. Dabei kann z. B. Wasser 8 aus einem Wasserhahn über diese Öffnung 11 in den Behälterabschnitt 2 eingefüllt werden. Zudem wird durch diese Öffnung 11 eine Rohreinrichtung 110 in den Behälterabschnitt 2 eingeschwenkt werden. Durch diese Rohreinrichtung 110 wird Wasser 8 aus dem Aufnahmeabschnitt 2 entnommen, um das Wasser der Dampferzeugereinrichtung 103 zur Verdampfung zuzuführen. Erfindungsgemäß ist dazu die Öffnung 11 in der Abdeckeinrichtung 10 insbesondere länglich ausgebildet und wird hier durch einen Schlitz 28 zur Verfügung gestellt.

Damit beim Transport der befüllten Behältereinrichtung 1 von einer Wasserquelle zum Gargerät 100 kein Wasser 8 verschüttet werden kann, ist dem Behälterabschnitt 2 eine Schutzvorrichtung 12 zugeordnet. Dabei ist die Schutzvorrichtung 12 in dem hier gezeigten Ausführungsbeispiel an der Abdeckeinrichtung 10 vorgesehen. Dabei ist die Abdeckeinrichtung 10 derart geformt, dass die Schutzeinrichtung 12 eine Art Kragen 29 bildet, der sich wenigstens abschnittsweise nach innen in den Behälterabschnitt 2 erstreckt. Durch diesen Kragen 29 wird effektiv verhindert, dass Wasser 8 beim Transport der Behältereinrichtung 1 aus der Öffnung 11 herausschwappen kann.

In anderen vorteilhaften Ausgestaltungen kann die Schutzeinrichtung 12 auch an dem Behälterabschnitt 2 vorgesehen und insbesondere an diesem ausgebildet sein.

Damit ein Benutzer die Behältereinrichtung 1 sicher und komfortabel ergreifen kann, ist zudem eine spezielle Dimensionierung des Halteabschnitts 3 bzw. des Griffs 25 vorgesehen. Die spezielle Dimensionierung wird anhand der nachfolgenden Figuren 5 und 6 näher erläutert.

Dabei liegt die Breite 17 des Griffs 25 zwischen 30 und 50 mm, wobei die Tiefe 19 des Griffs 25 wenigstens abschnittsweise zwischen 60% bis 75% der Breite 17 eines Griffs 25 ausmacht. Bei einer solchen Dimensionierung des Griffs 25 ist das Verhältnis zwischen Breite 17 und Tiefe 19 des Griffs 25 derart vorteilhaft gewählt, dass ein Benutzer die Behältereinrichtung 1 trotz der großen Höhe und Tiefe der Behältereinrichtung 1 sicher, zuverlässig und zudem auch komfortabel halten kann.

Damit ein Benutzer den Griff 25 auch gut erreichen und umgreifen kann, muss der Eingriff 18 zwischen Behälterabschnitt 2 und Halteabschnitt 3 eine entsprechende Größe aufweisen. Dabei ist der Eingriff 18 vorteilhaft derart ausgestaltet, dass die Tiefe des Eingriffs 20 wenigstens im Bereich des Griffs 25 wenigstens 20 mm beträgt. In dem hier gezeigten Ausführungsbeispiel ist die Tiefe des Eingriffs 20 auf 27 mm eingestellt worden, sodass ein Benutzer auch mit größeren Händen ohne Probleme durch den Eingriff 18 greifen und den Griff 25 umgreifen kann.

In Figur 6 ist eine geschnittene Draufsicht der Behältereinrichtung 1 rein schematisch dargestellt. In dieser Ansicht ist zu erkennen, dass der Halteabschnitt 3 bzw. der Griff 25 einen rundlichen Querschnitt 21 aufweist. Dies wird in dem gezeigten Ausführungsbeispiel dadurch erreicht, dass der Griff 25 an der Vorderseite 22 und an der Rückseite 23 im Wesentlichen gebogen ausgebildet ist.

Durch die Überwölbungen an der Vorderseite 22 und an der Rückseite 23 wird ein besonders komfortables Umgreifen des Griffes 25 ermöglicht. Damit ein Benutzer den Griff 25 besonders komfortabel umgreifen kann, sind die Kanten des Griffs 25 derart ausgestaltet, dass sich die Vorderseite 22 und die Rückseite 23 jeweils über wenigstens einen Radius 24 aneinander anschließen. Dadurch wird vermieden, dass der Griff 25 Kanten aufweist, die in die Hand eines Benutzers einschneiden könnten.

Durch die allgemeine rundliche Ausgestaltung des Griffs 5 und insbesondere auch durch die Radien 24 zwischen der Vorderseite 22 und der Rückseite 23 wird ein besonders ergonomisch geformter Griff 25 zur Verfügung gestellt.

In den Figuren 7 und 8 ist rein schematisch dargestellt, dass der Aufnahmeeinrichtung 106 des Gargerätes 100 ein push-to-open-Mechanismus 108 zugeordnet ist. Die Figuren zeigen rein schematisch eine Seitenansicht der Behältereinrichtung 1 in der Aufnahmeeinrichtung 106. Dabei ist der push-to-open-Mechanismus 108 in dem hier gezeigten Ausführungsbeispiel in der Aufnahmeeinrichtung 106 ausgebildet und unterstützt den Benutzer bei der Entnahme der Behältereinrichtung 1 aus dem Gargerät 100. In anderen Ausgestaltungen kann der push-to-open-Mechanismus 108 aber auch an der Behältereinrichtung 1 vorgesehen werden.

In den Figuren 7 und 8 ist rein schematisch dargestellt, dass eine Federeinrichtung 120 des push-to-open-Mechanismus 108 beim Einschieben der Behältereinrichtung 1 in die Aufnahmeeinrichtung 106 vorgespannt wird und in dieser Vorspannung gehalten wird. In dieser Situation ist die Behältereinrichtung 1 im Wesentlichen vollständig in die Aufnahmeeinrichtung 106 eingeschoben und bildet zusammen mit der Frontfläche 107 der Gehäuseeinrichtung 101 eine bündige Fläche.

Um die Behältereinrichtung 1 wieder aus der Aufnahmeeinrichtung 106 zu entnehmen, wird die Behältereinrichtung 101 ein kleines Stück in die Aufnahmeeinrichtung hinein geschoben, wodurch der push-to-open-Mechanismus 108 ausgelöst wird und die gespeicherte Federkraft ein Verlagerungselement 121 nach vorne schiebt. Dieses Verlagerungselement 121 drückt die Behältereinrichtung 1 dann soweit aus der Aufnahmeeinrichtung 106 heraus, dass ein Benutzer durch den Eingriff 18 zwischen Behälterabschnitt 2 und Halteabschnitt 3 hindurch greifen und den Griff 25 fassen kann. Ein geeigneter Kraftpunkt zum Auslösen des push-to-open-Mechanismus wird dem Benutzer durch eine Markierung 15 an der Front 26 des Halteabschnitts 3 angezeigt.

Zudem ist in den Figuren 7 und 8 zu erkennen, dass der Aufnahmeeinrichtung 106 eine Entnahmeeinrichtung 109 zugeordnet ist, über welche Wasser 8 aus dem Aufnahmeabschnitt 2 entnommen und der Dampferzeugereinrichtung 103 zugeführt wird. Dabei umfasst die Entnahmeeinrichtung 109 eine Rohreinrichtung 110, welche bei nicht eingeschobener Behältereinrichtung 1 durch eine hier nicht näher dargestellte Federeinrichtung 122 in einer ungefähr horizontalen Position gehalten wird. Wird die Behältereinrichtung 1 in die Aufnahmeeinrichtung 106 eingeschoben, tritt sie in Kontakt mit dem Verlagerungselement 121 des push-to-open-Mechanismus 108 und drückt dieses Verlagerungselement 121 zurück. Dadurch wird die Federeinrichtung 120 des push-to-open-Mechanismus 108 gespannt.

Zugleich wird automatisch die Rohreinrichtung 110 durch die Öffnung 11 in der Abdeckeinrichtung 10 der Behältereinrichtung 1 in den Behälterabschnitt 2 eingetaucht. Dies erfolgt dadurch, dass die Behältereinrichtung 1 gegen einen Schenkel 123 der Entnahmeeinrichtung 109 drückt und diese damit gegen die Federkraft der Federeinrichtung 122 in den Behälterabschnitt 2 eintauchen lässt.

Wird der push-to-open-Mechanismus 108 wieder entriegelt, wird die Behältereinrichtung 1 aus der Aufnahmeeinrichtung 106 durch die Federkraft der Federeinrichtung 120 heraus geschoben. Dadurch wird gleichzeitig die Rohreinrichtung 110 automatisch durch die Federeinrichtung 122 der Entnahmeeinrichtung 109 wieder nach oben weggeschwenkt, sodass die Behältereinrichtung 1 ohne Probleme aus dem Gargerät 100 entnommen werden kann.

### Bezugszeichenliste

- 1: Behältereinrichtung
- 2: Behälterabschnitt
- 3: Halteabschnitt
- 4: Längsausdehnung
- 5: Breite Behälterabschnitt
- 6: Höhe Behälterabschnitt
- 7: Aufnahmevolumen
- 8: Wasser
- 9: Längserstreckung
- 10: Abdeckeinrichtung
- 11: Öffnung
- 12: Schutzvorrichtung
- 13: Wandung
- 14: Wandung
- 15: Markierung
- 16: Höhe Halteabschnitt
- 17: Breite Griff
- 18: Eingriff
- 19: Tiefe Griff
- 20: Tiefe Eingriff
- 21: Querschnitt
- 22: Vorderseite
- 23: Rückseite
- 24: Radius
- 25: Griff
- 26: Front
- 27: Deckel
- 28: Schlitz
- 29: Kragen
- 100: Gargerät
- 101: Gehäuseeinrichtung
- 102: Garraum
- 103: Dampferzeugereinrichtung
- 104: Dampf
- 105: Wasservorrateinrichtung
- 106: Aufnahmeeinrichtung
- 107: Frontfläche
- 108: push-to-open-Mechanismus
- 109: Entnahmeeinrichtung
- 110: Rohreinrichtung
- 111: Garraumtür
- 112: Kombigargerät
- 113: Mikrowelleneinrichtung
- 114: Hochfrequenzerzeuger
- 115: Hochfrequenzstrahlung
- 116: Eintrittsstelle
- 117: Beschickungsöffnung
- 118: Dampfeinlass
- 119: Dampfauslass
- 120: Federeinrichtung
- 121: Verlagerungselement
- 122: Federeinrichtung
- 123: Schenkel

## Patentansprüche

1. Gargerät (100) mit wenigstens einer Gehäuseeinrichtung (101), wenigstens einem Garraum (102) und wenigstens einer Dampferzeugereinrichtung (103), wobei die Dampferzeugereinrichtung (103) wenigstens eine entnehmbare Behältereinrichtung (1) umfasst und dazu geeignet und ausgebildet ist, den Garraum (102) mit Dampf (104) zu versorgen und wobei die Behältereinrichtung (1) wenigstens einen Behälterabschnitt (2) und wenigstens einen Halteabschnitt (3) umfasst,
wobei der Behälterabschnitt (2) und der Halteabschnitt (3) zusammen eine Längsausdehnung (4) aufweisen,
wobei die Behältereinrichtung (1) eine Abdeckeinrichtung (10) umfasst und die Abdeckeinrichtung (10) als Deckel (27) ausgebildet ist und wenigstens eine Öffnung (11) aufweist;
**dadurch gekennzeichnet,**
**dass** die Längsausdehnung (4) ein Vielfaches der Breite (5) des Behälterabschnitts (2) beträgt,
und **dass** wenigstens der Behälterabschnitt (2) eine Höhe (6) aufweist, die ein Vielfaches der Breite (5) des Behälterabschnitts (2) beträgt,
und **dass** der Behälterabschnitt (2) ein Aufnahmevolumen (7) für zu verdampfendes Wasser (8) zur Verfügung stellt, das mindestens 1 Liter beträgt,
und **dass** die Behältereinrichtung (1) in eine entsprechende Aufnahmeeinrichtung (106) neben dem Garraum (102) einschiebbar ist und die Dampferzeugereinrichtung (103) wenigstens eine Entnahmeeinrichtung (109) umfasst, die wenigstens eine schwenkbare Rohreinrichtung (110) umfasst, welche beim Einschieben der Behältereinrichtung (1) in die Aufnahmeeinrichtung (106) wenigstens abschnittsweise in den Behälterabschnitt (2) eintaucht,
und **dass** die Rohreinrichtung (110) als ein Saugrohr ausgeführt ist, welches bei der Entnahme von Wasser aus der Behältereinrichtung (1) in diesen eingetaucht ist, und dass die Öffnung (11) in der Abdeckeinrichtung (10) insbesondere länglich ausgebildet und durch einen Schlitz (28) zur Verfügung gestellt ist, wobei durch die Öffnung (11) die Rohreinrichtung (110) in den Behälterabschnitt (2) einschwenkbar ausgeführt ist.

2. Gargerät (100) nach Anspruch 1, **dadurch gekennzeichnet, dass** die Längsausdehnung (4) des Behälterabschnitts (2) und des Halteabschnitts (3) und/oder die Höhe (6) des Behälterabschnitts (2) mindestens 4-mal so groß ist, wie die Breite (5) des Behälterabschnitts (2).

3. Gargerät (100) nach einem der vorhergehenden Ansprüche, **dadurch gekennzeichnet, dass** die Längsausdehnung (4) des Behälterabschnitts (2) und des Halteabschnitts (3) größer als die Höhe (6) des Behälterabschnitts (2) ist.

4. Gargerät (100) nach einem der vorhergehenden Ansprüche, **dadurch gekennzeichnet, dass** das Aufnahmevolumen (7) mindestens 1,3 Liter beträgt.

5. Gargerät (100) nach einem der vorhergehenden Ansprüche, **dadurch gekennzeichnet, dass** die Breite (5) des Behälterabschnitts (2) zwischen 3 cm und 5 cm liegt.

6. Gargerät (100) nach einem der vorhergehenden Ansprüche, **dadurch gekennzeichnet, dass** die Höhe (6) des Behälterabschnitts (2) zwischen 15 cm und 25 cm beträgt und/oder dass eine Längserstreckung (9) des Behälterabschnitts (2) zwischen 20 cm und 30 cm liegt und/oder das die Längserstreckung (4) des Behälterabschnitts (2) und des Halteabschnitts (3) und zwischen 25 cm und 35 cm liegt.

7. Gargerät (100) nach einem der vorhergehenden Ansprüche, **dadurch gekennzeichnet, dass** wenigstens dem Behälterabschnitt (2) die Abdeckeinrichtung (10) zugeordnet ist.

8. Gargerät (100) nach einem der beiden vorhergehenden Ansprüche, **dadurch gekennzeichnet, dass** der Abdeckeinrichtung (10) wenigstens eine Schutzvorrichtung (12) zugeordnet ist.

9. Gargerät (100) nach einem der drei vorhergehenden Ansprüche, **dadurch gekennzeichnet, dass** die Abdeckeinrichtung (10) wenigstens zwei Wandungen (13, 14) des Behälterabschnitts (2) wenigstens abschnittsweise umgreift.

10. Gargerät (100) nach einem der vorhergehenden Ansprüche, **dadurch gekennzeichnet, dass** der Halteabschnitt (3) wenigstens eine Bedienmarkierung (15) umfasst.

11. Gargerät (100) nach einem der vorhergehenden Ansprüche, **dadurch gekennzeichnet, dass** die Behältereinrichtung (1) im installierten Zustand im Wesentlichen bündig mit wenigstens einer Frontfläche (107) der Gehäuseeinrichtung (101) abschließt.

12. Gargerät (100) nach einem der vorhergehenden Ansprüche, **dadurch gekennzeichnet, dass** der Aufnahmeeinrichtung (106) wenigstens ein push-to-open-Mechanismus (108) zugeordnet ist.

## Claims

1. Cooking appliance (100) comprising at least one housing means (101), at least one cooking chamber (102) and at least one steam generation means (103), the steam generation means (103) comprising at least one removable container means (1) and being suitable for and designed to supply the cooking chamber (102) with steam (104), and the container means (1) comprising at least one container portion (2) and at least one holding portion (3),
the container portion (2) and the holding portion (3) together having a longitudinal extension (4), the container means (1) comprising a cover means (10) and the cover means (10) being designed as a lid (27) and comprising at least one opening (11),
**characterised in that**
the longitudinal extension (4) is a multiple of the width (5) of the container portion (2), and **in that** at least the container portion (2) has a height (6) that is a multiple of the width (5) of the container portion (2),
and **in that** the container portion (2) provides a capacity (7) for water (8) to be evaporated which is at least 1 litre,
and **in that** the container means (1) can be inserted into a corresponding receiving means (106) that is adjacent to the cooking chamber (102) and the steam generation means (103) comprises at least one removal means (109) that comprises at least one pivotable pipe means (110) that is immersed in the container portion (2) at least in portions when the container means (1) is inserted into the receiving means (106),
and **in that** the pipe means (110) is designed as a suction pipe, which is immersed in the container means when water is removed from said container means (1),
and **in that** the opening (11) in the cover means (10) is in particular elongate and is provided by a slot (28), the pipe means (110) being designed to be able to pivot through the opening (11) into the container means (2).

2. Cooking appliance (100) according to claim 1, **characterised in that** the longitudinal extension (4) of the container portion (2) and of the holding portion (3) and/or the height (6) of the container portion (2) is at least 4 times the size of the width (5) of the container portion (2).

3. Cooking appliance (100) according to either of the preceding claims, **characterised in that** the longitudinal extension (4) of the container portion (2) and of the holding portion (3) is greater than the height (6) of the container portion (2).

4. Cooking appliance (100) according to any of the preceding claims, **characterised in that** the capacity (7) is at least 1.3 litres.

5. Cooking appliance (100) according to any of the preceding claims, **characterised in that** the width (5) of the container portion (2) is between 3 cm and 5 cm.

6. Cooking appliance (100) according to any of the preceding claims, **characterised in that** the height (6) of the container portion (2) is between 15 cm and 25 cm and/or **in that** a longitudinal extension (9) of the container portion (2) is between 20 cm and 30 cm and/or **in that** the longitudinal extension (4) of the container portion (2) and of the holding portion (3) is between 25 cm and 35 cm.

7. Cooking appliance (100) according to any of the preceding claims, **characterised in that** the cover means (10) is associated at least with the container portion (2).

8. Cooking appliance (100) according to either of the two preceding claims, **characterised in that** at least one protective device (12) is associated with the cover means (10).

9. Cooking appliance (100) according to any of the three preceding claims, **characterised in that** the cover means (10) encompasses at least two walls (13, 14) of the container portion (2) at least in portions.

10. Cooking appliance (100) according to any of the preceding claims, **characterised in that** the holding portion (3) comprises at least one operating marking (15).

11. Cooking appliance (100) according to any of the preceding claims, **characterised in that** the container means (1), in the installed state, ends substantially flush with at least one front face (107) of the housing means (101).

12. Cooking appliance (100) according to any of the preceding claims, **characterised in that** at least one push-to-open mechanism (108) is associated with the receiving means (106).

## Revendications

1. Appareil de cuisson (100) avec au moins un dispositif formant boîtier (101), au moins un espace de cuisson (102) et au moins un dispositif générateur de vapeur (103), dans lequel le dispositif générateur de vapeur (103) comprend au moins un dispositif de récipient (1) amovible et est conçu et constitué pour alimenter l'espace de cuisson (102) en vapeur (104), et dans lequel le dispositif de récipient (1) comprend au moins un tronçon de récipient (2) et au moins un tronçon de retenue (3),
dans lequel le tronçon de récipient (2) et le tronçon de retenue (3) présentent conjointement une extension longitudinale (4),
dans lequel le dispositif de récipient (1) comprend un dispositif de couverture (10), et le dispositif de couverture (10) est constitué en tant que couvercle (27) et présente au moins une ouverture (11),
**caractérisé en ce que**
l'extension longitudinale (4) est égale à un multiple de la largeur (5) du tronçon de récipient (2),
et **en ce qu'**au moins le tronçon de récipient (2) présente une hauteur (6) qui est égale à un multiple de la largeur (5) du tronçon de récipient (2),
et **en ce que** le tronçon de récipient (2) met à disposition un volume de réception (7) pour l'eau (8) à vaporiser qui est égal à au moins 1 litre,
et **en ce que** le dispositif de récipient (1) peut être inséré dans un dispositif de réception (106) correspondant près de l'espace de cuisson (102) et le dispositif générateur de vapeur (103) comprend au moins un dispositif de prélèvement (109) qui comprend au moins un dispositif tubulaire (110) pivotant qui, lors de l'insertion du dispositif de récipient (1) dans le dispositif de réception (106), plonge au moins par tronçons dans le tronçon de récipient (2),
et **en ce que** le dispositif tubulaire (110) est réalisé en tant que tube d'aspiration qui, lors du prélèvement d'eau à partir du dispositif de récipient (1), est plongé dans celui-ci,
et **en ce que** l'ouverture (11) est constituée en particulier sous forme allongée dans le dispositif de couverture (10) et est mise à disposition à travers une fente (28), dans lequel le dispositif tubulaire (110) est réalisé de façon pivotante dans le tronçon de récipient (2) à travers l'ouverture (11).

2. Appareil de cuisson (100) selon la revendication 1, **caractérisé en ce que** l'extension longitudinale (4) du tronçon de récipient (2) et du tronçon de retenue (3) et/ou la hauteur (6) du tronçon de récipient (2) est au moins 4 fois plus importante que la largeur (5) du tronçon de récipient (2).

3. Appareil de cuisson (100) selon l'une des revendications précédentes, **caractérisé en ce que** l'extension longitudinale (4) du tronçon de récipient (2) et du tronçon de retenue (3) est plus grande que la hauteur (6) du tronçon de récipient (2).

4. Appareil de cuisson (100) selon l'une des revendications précédentes, **caractérisé en ce que** le volume de réception (7) est au moins égal à 1,3 litre.

5. Appareil de cuisson (100) selon l'une des revendications précédentes, **caractérisé en ce que** la largeur (5) du tronçon de récipient (2) est comprise entre 3 cm et 5 cm.

6. Appareil de cuisson (100) selon l'une des revendications précédentes, **caractérisé en ce que** la hauteur (6) du tronçon de récipient (2) est comprise entre 15 cm et 25 cm et/ou **en ce qu'**une extension longitudinale (9) du tronçon de récipient (2) est comprise entre 20 cm et 30 cm et/ou **en ce que** l'extension longitudinale (4) du tronçon de récipient (2) et du tronçon de retenue (3) est comprise entre 25 cm et 35 cm.

7. Appareil de cuisson (100) selon l'une des revendications précédentes, **caractérisé en ce qu'**un dispositif de couverture (10) est affecté au moins au tronçon de récipient (2).

8. Appareil de cuisson (100) selon l'une des deux revendications précédentes, **caractérisé en ce qu'**au moins un dispositif de protection (12) est affecté au dispositif de couverture (10).

9. Appareil de cuisson (100) selon l'une des trois revendications précédentes, **caractérisé en ce que** le dispositif de couverture (10) entoure au moins deux parois (13, 14) du tronçon de récipient (2) au moins par tronçons.

10. Appareil de cuisson (100) selon l'une des revendications précédentes, **caractérisé en ce que** le tronçon de retenue (3) comprend au moins un marquage d'utilisation (15).

11. Appareil de cuisson (100) selon l'une des revendications précédentes, **caractérisé en ce que**, dans l'état installé, le dispositif de récipient (1) se termine essentiellement en affleurement avec au moins une surface frontale (107) du dispositif formant boîtier (101).

12. Appareil de cuisson (100) selon l'une des revendications précédentes, **caractérisé en ce qu'**au moins un mécanisme push-to-open (108) est affecté au dispositif de réception (106).
